Europäisches Patentamt

European Patent Office

Office européen des brevets

(19)

(11) **EP 1 471 397 A2**

(12) **EUROPEAN PATENT APPLICATION**

(43) Date of publication:
   **27.10.2004 Bulletin 2004/44**

(51) Int Cl.⁷: **G05B 13/00**

(21) Application number: **03257729.8**

(22) Date of filing: **09.12.2003**

(84) Designated Contracting States:
   **AT BE BG CH CY CZ DE DK EE ES FI FR GB GR
   HU IE IT LI LU MC NL PT RO SE SI SK TR**
   Designated Extension States:
   **AL LT LV MK**

(30) Priority: **25.04.2003 GB 0309489**

(71) Applicant: **Falmer Investments Limited
   Road Town, Tortola (VG)**

(72) Inventor: **Tsui Tak Ming, William
   Sale, Cheshire M33 2DW (GB)**

(74) Representative: **McGowan, Cathrine
   D Young & Co,
   21 New Fetter Lane
   London EC4A 1DA (GB)**

(54) **Adaptive fuzzy logic temperature control**

(57)   Fluid temperature control is achieved by using fuzzy logic rules sets to derive values of integral gain $K_I$ and proportional gain $K_P$ for use in a proportional-integral temperature controller operable to generate a valve control signal $v(t)$ representing a magnitude of an opening in a inlet valve of a heat exchanger operable to regulate the temperature of the fluid under control of the proportional-integral controller. The fuzzy rules sets have as inputs fuzzy representations of signals derived from the valve control signal $v(t)$ and a signal $e(t)$ representing an error in temperature between an actual measured temperature of the fluid and a desired temperature of the fluid. A fuzzy logic control module associated with the proportional-integral controller can implement the fuzzy logic rules sets. The fluid may be, for example, dye in a textiles dyeing process.

Figure 4

## Description

## BACKGROUND OF THE INVENTION

The present invention relates to apparatus and methods pertaining to the use of fuzzy logic to control temperature, particularly but not exclusively the control of fluid temperature within dyeing apparatus.

In the textile industry, dyeing apparatus such as jet-dyeing machines is used to dye fabric and yam packages. The quality of the dyeing is greatly affected by the temperature of the dye, which is in a liquid state. Therefore, control of the dye temperature to reflect as closely as possible a desired temperature or temperature profile is typically performed. To achieve this control, a dyeing machine is generally equipped with a heat exchanger to provide appropriate heating and cooling functions. The heat exchanger operation is often controlled using a proportional-integral (PI) or proportional-integral-derivative (PID) controller; this is a well-developed control technique widely used in many industries.

Many different dyeing techniques are used to dye different fabrics with different colours. These various techniques depend on the control of several physical parameters of the dyeing process, such as the liquid dye temperature, the pressure in the main dyeing tank, the liquid flow rate and the amount of liquid dye. These parameters tend to vary extensively during the dyeing process. Additionally, the heat exchanger will have highly nonlinear operating characteristics. Thus, it is nontrivial to achieve accurate temperature control throughout the duration of the dyeing process, and from one process to the next.

The PI/PID controllers used at present on fabric dyeing machines are simple linear control loops, which have difficulty in meeting these complex temperature control requirements, and are not always able to deliver the necessary transient and steady-state responses. These devices are thus not entirely suitable for the demanding task of controlling dye temperature under the highly nonlinear and time-variant conditions presented by the dyeing process. Additionally, tuning of the input parameters used by the controllers is very time-consuming, and it is further difficult to obtain an optimum set of parameters.

The problem of providing accurate temperature control has been addressed during recent years in other technological areas, including the industrial and medical sectors. The methodologies proposed typically provide a degree of adaptability to self-tune the relevant control parameters according to the environmental conditions. For example, Kurcharski and Sankowski have looked at the issue of auto-tuning in temperature control [1]. They propose a technique in which a system identification is conducted to identify various system dynamics, which are then used in an auto-tuning method applied to calibrate the control parameters. However, the method is only applicable to a relatively time-invariant system. Thus, it is of limited use in textiles dyeing, where it is impractical to conduct an auto-tuning procedure before each batch of dyeing processes.

An alternative temperature control method, which is model-based and directed to the clinical application of temperature tracking in hyperthermia, has been developed by Mattingly et al [2]. A thermal model of the target system is obtained, and an inverse dynamic technique and Kalman filtering are applied to derive a control loop for the temperature control. Accurate control can be achieved, but computational complexity and memory requirements are very high, so the method is not attractive to the fabric industry. Also, it can only be applied to time-invariant linear systems.

Fuzzy logic has been applied in a third technique. Li and Lee have proposed a self-organising fuzzy intelligent system for water bath temperature control. With the help of a clustering algorithm, a self-organising or adaptive inverse learning algorithm was developed to automatically derive "if-then" fuzzy logic rules for a fuzzy controller. However, great computational resources are required to utilise the method, making it costly and impractical to implement industrially.

Therefore, there is a requirement for improved temperature control within the dyeing industry, preferably in the form of a low cost system that can be readily integrated with existing dyeing machines.

## SUMMARY OF THE INVENTION

Accordingly, a first aspect of the present invention is directed to a fuzzy logic control module operable to receive inputs and deliver outputs related to the inputs via fuzzy logic rules, wherein a first input is a signal e(t) representing an error in temperature between an actual measured temperature of a fluid and a desired temperature of that fluid; a second input is a valve control signal v(t) representing a magnitude of an opening in a inlet valve of a heat exchanger operable to regulate the temperature of the fluid under control of a proportional-integral controller that generates the valve control signal v (t); a first output is a value of integral gain $K_I$ required by the proportional-integral controller; and a second output is a value of proportional gain $K_P$ required by the proportional-integral controller.

In this way, the fuzzy logic control module can provide improved operation of a proportional-integral controller used in fluid temperature control, so as to enhance control of the fluid temperature. This in turn improves the quality of any process that relies on accurate temperature control, such as fabric and yarn dyeing in the textiles industry, in which the temperature of the dye is critical. The fuzzy logic control module attains this enhancement by taking account of both the characteristics of the operation of the temperature-regulating proportional-integral controller by using both the error between the actual and desired fluid temperature and the heat exchanger inlet valve opening, and the overall characteristics of the system to which the temperature control is being applied, via the temperature error. In the case of fabric dyeing, these characteristics depend on many varying parameters, such as pressure, fluid flow rate, amount of fluid and nonlinear operation of the heat exchanger. By accounting for many system variables, and then using fuzzy logic to determine control of the fluid temperature from measurements that depend on those variables, the control is bettered, and the nonlinearities to which many systems are prone can be addressed. The use of fuzzy logic results in better temperature tracking performance that is available using conventional proportional-integral or proportional-integral-derivative controllers.

Further, a fuzzy logic control module according to the first aspect of the present invention can be directly applied to existing apparatus that uses proportional-integral control to control fluid temperature without any significant modification or adaptation. Proportional-integral controllers function using values of proportional gain $K_P$ and integral gain $K_I$, and the fuzzy logic control module provides improved values of these parameters by taking substantial account of the varying operational characteristics of the apparatus via simple measurements. It further requires much smaller computational and memory resources compared to previously proposed improvements to temperature control. This permits the fuzzy logic control module and also its associated proportional-integral controller to be implemented with a low-cost standard microprocessor system.

In one embodiment, the fuzzy logic rules comprise a first fuzzy rules set that maps fuzzy representations of signals related to at least one of the inputs to a fuzzy representation of a signal related to the integral gain $K_I$. Thus, a dedicated fuzzy rules set is used to calculate the integral gain, so that inputs that most affect this particular output can be specifically used in the calculation.

The fuzzy logic control module may be further operable to calculate from the signal e(t) a signal $\Delta$e(t) representing a change in the error in temperature between time t-1 and time t. This provides an indication of how successful previous iterations in the temperature control process have been in matching the actual and desired temperatures. By taking this into account, so that the calculated gain values are less likely to overshoot and reduce accuracy.

The fuzzy representations of signals mapped by the first fuzzy rules set may be fuzzy representations of e(t) and $\Delta$e(t). These values provide a good basis from which to calculate the integral gain.

To obtain the fuzzy representations, the fuzzy logic control module may further comprise a first fuzzy logic input membership function operable to convert the signal $\Delta$e(t) to a fuzzy representation, and also possibly a first absolute value operator operable to convert the signal $\Delta$e(t) to its absolute value |$\Delta$e(t)| before conversion by its fuzzy logic input membership function. This removes any computational uncertainty that may arise through the use of positive and negative signals. Similarly, the fuzzy logic control module may further comprise a second fuzzy logic input membership function operable to convert the signal e(t) to a fuzzy representation, and possibly a second absolute value operator operable to convert the signal e(t) to its absolute value |e(t)| before conversion by its fuzzy logic input membership function.

In one embodiment, the fuzzy representation of a signal related to the integral gain $K_I$ is a fuzzy representation of a signal $\Delta K_I$ representing a change in $K_I$ between time t-1 and time t. The final output of $K_I$ may then be obtained by providing the module with a first fuzzy logic output membership function operable to convert the fuzzy representations of $\Delta K_I$ to $\Delta K_I$, and further arranging the module to be operable to calculate the first output $K_I$ from $\Delta K_I$ and a previous value of $K_I$ at time t-1.

Furthermore, the fuzzy logic rules may comprise a second fuzzy rules set that maps fuzzy representations of signals related to at least one of the inputs to a fuzzy representation of a signal related to the proportional gain $K_P$. In this way, the proportional gain has a dedicated fuzzy rules set so that the inputs that most affect it can be specifically used in the calculation.

To this end, the fuzzy logic control module may be further operable to calculate from the valve control signal v(t) a signal $\Delta$v(t) representing a change in the magnitude of the opening of the inlet valve between time t-1 and time t. Then, the fuzzy representations of signals mapped by the second fuzzy rules set may be fuzzy representations of e(t) and $\Delta$v(t).

To achieve this, the module may further comprise a third fuzzy logic input membership function operable to convert the signal $\Delta$v(t) to a fuzzy representation, and perhaps also a third absolute value operator operable to convert the signal $\Delta$v(t) to its absolute value |$\Delta$v(t)| before conversion by its fuzzy logic input membership function. Similarly, the module may further comprise a fuzzy logic input membership function operable to convert the signal e(t) to a fuzzy representation, and optionally also an absolute value operator operable to convert the signal e(t) to its absolute value |e(t)| before conversion by its fuzzy logic input membership function.

Preferably, the fuzzy representation of a signal related to the proportional gain $K_P$ is a fuzzy representation of a signal $\Delta K_P$ representing a change in $K_P$ between time t-1 and time t. In this way, the proportional gain can be adjusted in increments or decrements using the calculated value of change. The updated value is thus tied to the previous value, which avoids potential errors that may arise through the alternative approach of calculating a new absolute gain value. To this end, the fuzzy logic control module may further comprise a second fuzzy logic output membership function operable to convert the fuzzy representation of $\Delta K_P$ to $K_P$, and may be further operable to calculate the second output $K_P$ from $\Delta K_P$ and a previous value of $K_P$ at time t-1.

A second aspect of the present invention is directed to a temperature control unit comprising: a fuzzy logic control module according to any of the embodiments of the first aspect of the invention; and a proportional-integral controller arranged to receive the first and second outputs from the fuzzy logic control module and operable to use the said first and second outputs to generate the valve control signal v(t). This provides a single integrated unit that offers improved proportional-integral temperature control by means of fuzzy logic as addressed by the first aspect of the invention.

Advantageously, the proportional-integral controller is operable to calculate the valve control signal v(t) according to: $v(t) = K_Pe(t) + K_I\int e(t)\, dt$.

The temperature control unit may be further arranged to receive a signal y(t) representing the actual measured temperature of the fluid and a signal r(t) representing the desired temperature of the fluid, the temperature control unit comprising a summing device operable to calculate the signal e(t) from y(t) and r(t). Thus, all required computational functions are provided within a single unit.

The temperature control unit may further comprise a temperature sensor operable to measure the actual temperature of the fluid, convert the measurement to the signal y(t) and deliver the signal y(t) to the temperature control unit.

A third aspect of the present invention is directed to a dyeing machine comprising: a main tank to receive textile material to be dyed; a pipe works arranged to circulate dye through the main tank; a heat exchanger operable to regulate the temperature of the dye, the heat exchanger having an inlet valve with an opening having an adjustable magnitude to let heating and cooling material into the heat exchanger, the magnitude of the opening being represented by a valve control signal v(t); a temperature sensor operable to measure the actual temperature of the dye after it has been regulated by the heat exchanger and deliver a signal y(t) representing the actual measured temperature; and a temperature control unit according to any one of claims 22 to 24, provided with a signal r(t) representing the desired temperature of the dye during a dyeing process, the temperature control unit arranged to receive the signal y(t) from the temperature sensor, and operable to calculate a signal e(t) representing an error in temperature between the actual measured temperature of the fluid y(t) and a desired temperature of the fluid, and to deliver a signal valve control signal v(t) to the heat exchanger inlet valve to adjust the magnitude of the inlet valve opening and thereby regulate the temperature of the dye in accordance with the desired temperature.

Fuzzy logic temperature control embodied in the fuzzy logic control module and temperature control units of the first and second aspects of the present invention is of particular benefit in the textiles industry, where accurate dye temperature control is desired to improve dyeing quality, but where low cost and simplicity of implementation are highly desirable.

A fourth aspect of the present invention is directed to a method of controlling fluid temperature, comprising: measuring an actual temperature of a fluid and generating a signal y(t) representing the actual temperature; supplying the signal y(t) to a proportional-integral controller; calculating a signal e(t) representing an error in temperature between the actual measured temperature of the fluid and a desired temperature of the fluid; using the proportional-integral controller to generate a valve control signal v(t) representing a magnitude of an opening in an inlet valve of a heat exchanger operable to regulate a fluid temperature from the signal e(t), an integral gain $K_I$ and a proportional gain $K_P$; and supplying the valve control signal v(t) to the inlet valve to control the fluid temperature; wherein the integral gain $K_I$ and the proportional gain $K_P$ are obtained using fuzzy logic by applying fuzzy logic rules to map fuzzy representations of signals related to the valve control signal v(t) and to the temperature error signal e(t) to fuzzy representations of signals related to the integral gain $K_I$ and the proportional gain $K_P$.

The method may further comprise calculating a signal related to the temperature error signal e(t) by calculating from the temperature error signal e(t) a signal $\Delta e(t)$ representing a change in error in temperature between time t-1 and time t. Then, the applying of the fuzzy logic rules may comprise applying a first fuzzy rules set that maps fuzzy representations of e(t) and $\Delta e(t)$ to a fuzzy representation of a signal related to the integral gain $K_I$.

Also, the method may further comprise calculating a signal related to the valve control signal v(t) by calculating from the valve control signal v(t) a signal $\Delta v(t)$ representing a change in the magnitude of the inlet valve opening between time t-1 and time t. The applying of the fuzzy logic rules may then comprise applying a second fuzzy rules set that maps fuzzy representations of e(t) and $\Delta v(t)$ to a fuzzy representation of a signal related to the proportional gain $K_P$.

## BRIEF DESCRIPTION OF THE DRAWINGS

For a better understanding of the invention and to show how the same may be carried into effect reference is now made by way of example to the accompanying drawings in which:

Figure 1 shows a simplified schematic representation of a fabric dyeing machine;
Figure 2 shows a block diagram representation of a prior art temperature control technique used with fabric dyeing machines such as that depicted in Figure 1;
Figure 3 shows a block diagram representation of the temperature control technique of Figure 2 modified in accordance with an aspect of the present invention to include a fuzzy logic control module;

Figure 4 shows a block diagram representation of the fuzzy logic control module of Figure 3;

Figure 5 shows a graphical representation of fuzzy logic input membership functions used in the fuzzy logic control module of Figure 3; and

Figure 6 shows a graphical representation of fuzzy logic output membership functions used in the fuzzy logic control module of Figure 3.

## DETAILED DESCRIPTION

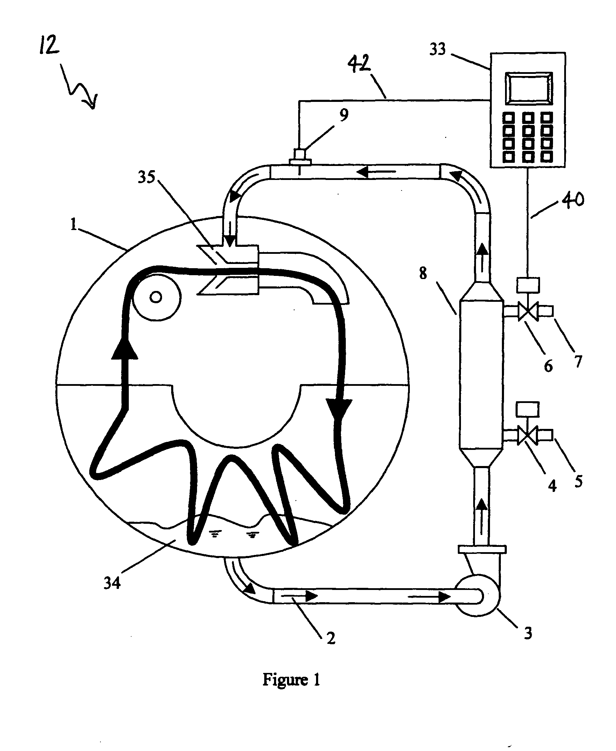

Figure 1 shows a simplified schematic representation of a dyeing machine. The dyeing machine 12 comprises a main tank 1, in which fabric or yarn is placed to be dyed. Dye liquid 34 is circulated through a pipe works 2 by a circulation pump 3. A first end of the pipe works 2 forms an outlet from the base of the main tank 1, and a second end of the pipe works 2 forms an inlet at the top of the main tank 1, so that dye can circulate around the pipe works and through the main tank 1. A jet nozzle 35 is arranged at the inlet to the main tank 1, which directs incoming dye onto the fabric. Excess dye 34 collects at the bottom of the main tank 1, and can thus be recirculated via the outlet.

Arranged along the pipe works 2 is a heat exchanger 8 through which the dye passes before entering the main tank 1. The heat exchanger 8 has an inlet pipe 7 and an outlet pipe 5 for steam and cooling water (sources of which are not shown). The inlet pipe 7 is equipped with an inlet modulation valve 6 that can be opened and closed to control the amount of steam/cooling water entering the heat exchanger, and the outlet pipe is equipped with a valve 4. The heat exchanger 8 is operable to heat and cool the dye 34 to a temperature appropriate for the dyeing process. To achieve this, a temperature control unit 33 is provided that is configured to control the magnitude of the opening of the modulation valve 6 via a control line 40, so as to let more or less steam or cooling water into the heat exchanger. The temperature control unit performs proportional-integral (PI) control. The output of the PI control process is thus a signal to adjust the magnitude of the aperture of the modulation valve 6. The input to the PI process is a measurement of the actual temperature of the dye after it has passed through the heat exchanger 8 and before it enters the main tank 1. This is obtained via a further control line 42 from a temperature sensor 9 arranged on the pipe works 2. Thus a feed-back loop is set up, in which the actual temperature of the dye is used to control the heating/cooling of the dye by opening or closing the heat exchanger modulation valve 6, with the object of achieving a dye temperature as close as possible to a desired set-point temperature at any given point in time during the dyeing process being carried out. The temperature control unit 33 may be implemented in any convenient way, such as a microprocessor programmed with suitable PI software.

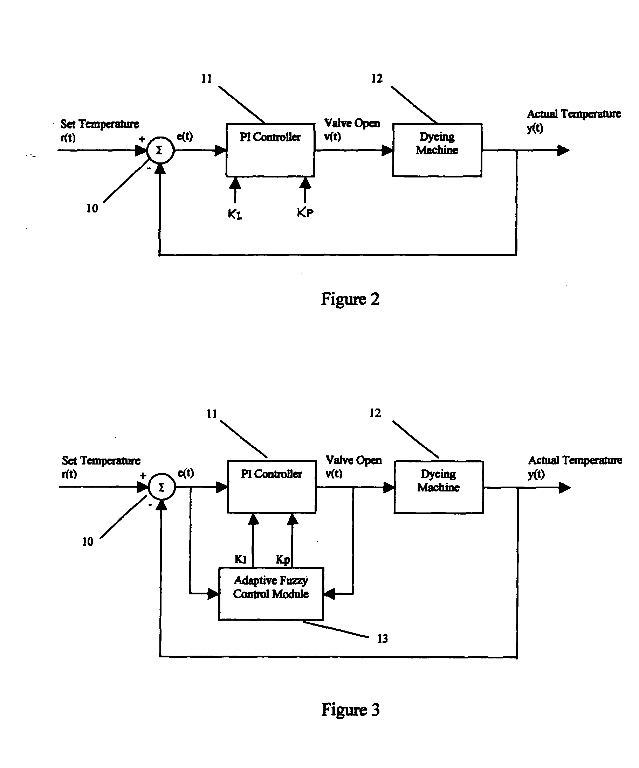

Figure 2 is a block diagram representation of the operation of the temperature control unit 33. The temperature control unit 33 is programmed or otherwise provided in advance with a set-point temperature profile r(t), which describes how the dye temperature should vary with time during a particular dyeing process. The output of the temperature sensor 9, y(t), being a measurement of the actual temperature of the dye over time, is fed to the temperature control unit 33.

The temperature control unit 33 includes a first summing device 10 that receives at time t the signals r(t) and y(t) and calculates the error e(t) in the actual temperature y(t) from e(t) = r(t) + (-y(t)). The temperature error e(t) is then input into a PI controller 11. The PI controller 11 uses the value of e(t) to calculate a valve control signal v(t) that is output from the temperature control unit 33 and delivered to the modulation valve 6 to adjust the size of the aperture. The procedure is then repeated at time t+1, t+2, etc., to provide dynamic temperature control until the dyeing process is complete.

The signal v(t) is calculated in accordance with the following equation:

$$v(t) = K_P e(t) + K_I \int e(t)\, dt \qquad (1)$$

where $K_P$ represents a proportional gain of the system, and $K_I$ represents an integral gain of the system. The gains $K_P$ and $K_I$ are calculated so as to give appropriate temperature control to achieve y(t) = r(t), as far as possible. The calculation of v(t) may optionally include a third term incorporating a derivative gain, $K_D$, in which case the PI controller is a PID (proportional-integral-derivative) controller. This can improve accuracy.

According to known PI control in dyeing machines, $K_P$ and $K_I$ are either constants or simple functions of the actual dye temperature y(t) that are provided to the PI controller in advance, as indicated in Figure 2. However, it has been found that this provides inadequate temperature control, leading to reduced dyeing quality.

According to the present invention, the temperature control unit 33 is modified by the addition of a fuzzy control module operable to provide continuous updating of the gain values $K_P$ and $K_I$ in response to system parameters. This has been found to greatly improve the matching of the actual dye temperature y(t) to the set-point temperature r(t).

Figure 3 shows a block diagram of the temperature control unit 33 provided with fuzzy logic capabilities in accordance with the present invention. A fuzzy logic control module 13 receives two input signals, these being the temperature error e(t) and the valve control signal v(t). The fuzzy control module 13 is operable (by comprising suitable electronic circuitry or a computer program, for example) to perform fuzzy logic operations on these input signals and on further signals derived therefrom, which deliver as their result values of $K_P$ and $K_I$. These values are fed from the fuzzy control module 13 to the PI controller 11, where they are used to execute equation 1 to return the desired value of v(t). Thus, adaptive fuzzy control of the dye temperature is achieved.

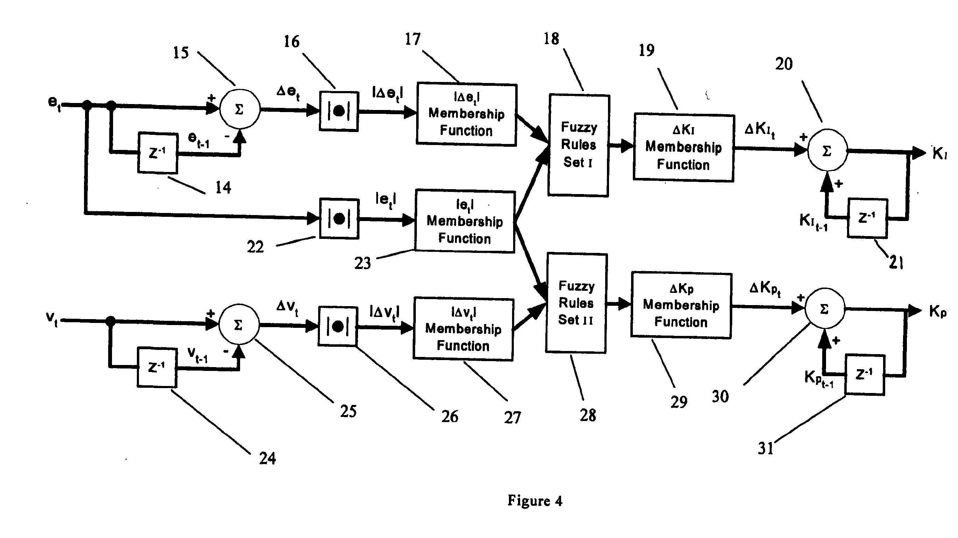

Figure 4 shows a detailed block diagram of the computational steps of an embodiment of the fuzzy control module 13. The upper portion of the diagram relates to the input of the temperature error e(t), calculated by the summing device 10. The value of e(t) is fed to a second summing device 15, together with the previous value of the temperature error, e(t-1), which has been stored in a first time delay operator 14. The summing device 15 calculates the change in the temperature error, $\Delta e(t)$, from $\Delta e(t) = e(t) + (-e(t-1))$. The absolute value of $\Delta e(t)$, $|\Delta e(t)|$, is then obtained by passing $\Delta e(t)$ through a first absolute value operator 16. Similarly, the absolute value of e(t), $|e(t)|$ is obtained by passing e(t) through a second absolute value operator 22.

These absolute values are then each fuzzified, by inputting them into respective fuzzy input membership functions 17, 23, which convert the two absolute values into corresponding fuzzy representations. The two fuzzy representations are then input into a first fuzzy rules set 18, to obtain a fuzzy solution. The first fuzzy rules set 18 comprises a set of rules that maps each of the various possible pairs of the fuzzy representations of $|e(t)|$ and $|\Delta e(t)|$ to a particular fuzzy solution. Each fuzzy solution is a fuzzy representation of a value of change in the integral gain $K_I(t)$, $\Delta K_I(t)$.

The returned fuzzy representation of $\Delta K_I(t)$ is then defuzzified by passing it through an output membership function 19 to obtain a crisp value, single number representation of $\Delta K_I(t)$. This is then applied to a third summing device 20 which calculates a new value of $K_I(t)$, by summing $\Delta K_I(t)$ with the previous value of $K_I$, $K_I(t-1)$, which is obtained from a second time-delay operator 21.

The lower portion of Figure 4 relates to the input of the valve control signal v(t). This signal is operated on by a fourth summing device 25 which calculates a value of the change in valve control signal, $\Delta v(t)$, by using the previous value of v(t), v(t-1), obtained from a third time-delay device 24 such that $\Delta v(t) = v(t) + (-(v(t-1))$. A third absolute value operator 26 then converts $\Delta v(t)$ to its absolute value $|\Delta v(t)|$.

As with the signals relating to temperature, $|\Delta v(t)|$ is next fuzzified by applying to it a fuzzy input membership function 27 to obtain a fuzzy representation of $|\Delta v(t)|$. A second fuzzy rules set 28 is then utilised, which has as its inputs the fuzzy representation of $|\Delta v(t)|$ and the fuzzy representation of the absolute value of the temperature error, $|e(t)|$ already described. The second fuzzy rules set 28 relates each of the various possible pairs of these inputs to a single fuzzy solution, which in this case is a fuzzy representation of a value of change in the proportional gain $K_P(t)$, $\Delta K_P(t)$.

As with the integral gain, the returned fuzzy representation of $\Delta K_P(t)$ is defuzzified by passing it through an output membership function 29 to obtain a crisp value, single number representation of $\Delta K_P(t)$. This is applied to a fifth summing device 30 which calculates a new value of $K_P(t)$, by summing $\Delta K_P(t)$ with the previous value of $K_P$, $K_P(t-1)$, which is obtained from a fourth time-delay operator 31.

The newly calculated values of $K_P$ and $K_I$ are supplied to the PI controller 11, to enable the new value of the valve control signal, v(t+1), to be calculated using equation 1, and then applied to opening or shutting of the modulation valve 6, thus regulating the dye temperature.

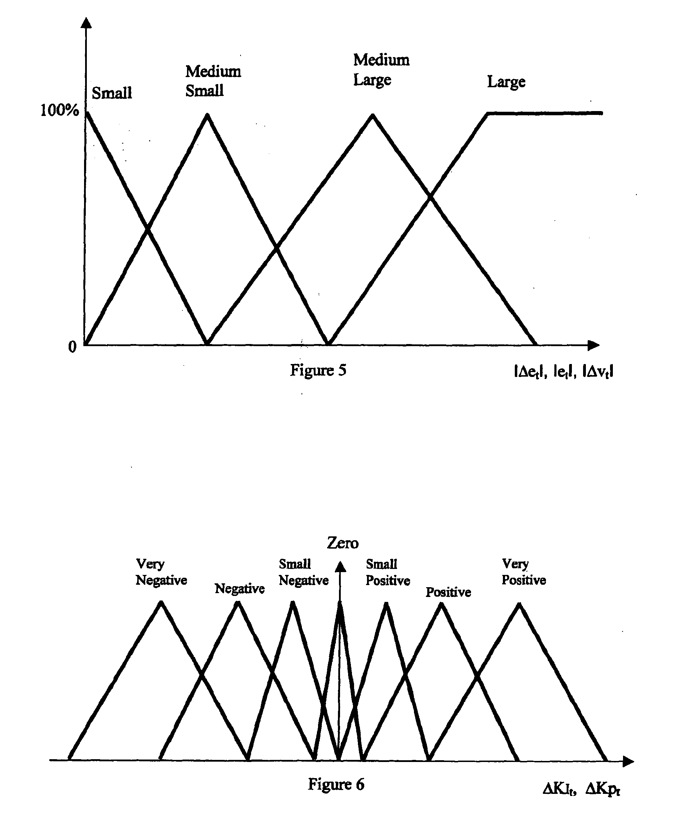

Figure 5 shows a graphical representation of example membership functions 17, 23, 27 for the absolute values of change in temperature error $|\Delta e(t)|$, temperature error $|e(t)|$ and change in valve control signal $|\Delta v(t)|$. The purpose of the input membership functions is to fuzzify the input signals to produce fuzzy representations of the signals in terms of fuzzy linguistic terms, namely Small, Medium Small, Medium Large and Large, in accordance with fuzzy logic. As explained, the fuzzy representations form the inputs to the first and second fuzzy rules sets 18, 28.

Figure 6 shows a graphical representation of example output membership functions 19, 29 of the changes in the proportional and integral gain, $\Delta K_P$ and $\Delta K_I$. The output membership functions are used to defuzzify the fuzzy solutions returned by the fuzzy rules sets 18, 28 to obtain crisp values of $\Delta K_P$ and $\Delta K_I$. The fuzzy solutions are defined in terms of the fuzzy linguistic terms Very Negative, Negative, Small Negative, Zero, Small Positive, Positive and Very Positive.

The fuzzy rules sets comprise a series of fuzzy logic statements relating pairs of the inputs to a particular solution, such as:

"if $|\Delta e(t)|$ is small and $|e(t)|$ is medium large, then $\Delta K_I$ is positive"; or

"if $|\Delta v(t)|$ is large and $|e(t)|$ is medium small, then $\Delta K_P$ is very negative"

A rule is defined for every possible pair of fuzzy input "values". In this way, the change in gain required to achieve the correct temperature can be determined for all possible input conditions, so that the dye temperature y(t) can be dynamically adjusted to correspond to the set point temperature r(t).

The membership functions and the fuzzy rules sets are preferably obtained from experimental results and from the experience of service engineers who work with the relevant dye machines, using known fuzzy logic techniques. For maximum flexibility and output quality, a plurality of membership functions and fuzzy rules sets can be determined and provided to the fuzzy control module 13, covering the various dyeing processes carried out. Also, different set-point temperature profiles are typically required for different processes, reflecting variations such as the different thermal properties of the dyes, the temperatures at which the dyes fix to the fabric, and the type and quantity of fabric. Then, the temperature control unit 33 can be configured to utilise the appropriate membership functions, fuzzy rules sets and temperature profile when an operator enters information identifying a particular dyeing process into the temperature control unit 33, for instance by way of data entry buttons or similar provided on the temperature control unit 33.

Various modifications may be made to the above-described embodiment of the fuzzy logic control module. For example, the fuzzy rules sets may be configured to map fuzzy representations of the various inputs directly to fuzzy representations of the integral and proportional gains, instead of to fuzzy representations of the change in gain as described above. In this case, the summing devices and time delay operators used to convert the $\Delta K$ values to K values for use in the PI controller are unnecessary. Alternatively, the fuzzy rules sets may map to fuzzy representations of signals related in other ways to the gain values, and the fuzzy logic control module can then comprise devices and operators configured to perform the necessary mathematical functions to derive the final gain values from the outputs of the fuzzy rules sets.

In a further alternative embodiment, one or more of the absolute value operators may be dispensed with. The functionality of the absolute value operators may instead be replicated by the input membership functions, which could be configured to return the same fuzzy representation for positive and negative values of the input signals, or by the fuzzy rules sets, which could be configured to map fuzzy representations of positive and negative values to the same fuzzy solution. Alternatively, the distinction between positive and negative values could be retained during the input fuzzification process, and the fuzzy rules sets configured to provide different mappings for the two types of values, so that different values of gain are delivered to the PI controller depending on whether the input errors and changes are positive or negative. This makes the overall control technique more complex, but may provide an increased accuracy of control that in some cases may outweigh the increased complexity.

Although the present invention is particularly advantageous for use in the textiles industry, it is also applicable to other temperature control applications that rely on valve-controlled heat exchangers to heat and cool fluids. In particular, it is of benefit in processes that require a complex time-varying temperature profile to be accurately maintained in the face of many variable system parameters.

## REFERENCES

[1] J Kucharski and D Sankowski, "Closed loop MBS identification in auto-tuning temperature control", Int. Conf. Control '94, 21-24 March 1994, vol. 1, pp 309-313.
[2] M Mattingly, RB Roemer and S Devasia, "Exact temperature tracking for hyperthermia: A model-based approach", IEEE Trans. Control Systems Technology, Nov. 2000, vol. 8 (6), pp 979-992.
[3] C Li and CY Lee, "Self-organising fuzzy intelligent system", 37th Industry Applications Conference, 2002, vol 1, pp 473-477.

## Claims

1. A fuzzy logic control module operable to receive inputs and deliver outputs related to the inputs via fuzzy logic rules, wherein

   a first input is a signal e(t) representing an error in temperature between an actual measured temperature of a fluid and a desired temperature of that fluid;

   a second input is a valve control signal v(t) representing a magnitude of an opening in a inlet valve of a heat exchanger operable to regulate the temperature of the fluid under control of a proportional-integral controller that generates the valve control signal v(t);

   a first output is a value of integral gain $K_I$ required by the proportional-integral controller; and

   a second output is a value of proportional gain $K_P$ required by the proportional-integral controller.

2. A fuzzy logic control module according to claim 1, in which the fuzzy logic rules comprise a first fuzzy rules set that maps fuzzy representations of signals related to at least one of the inputs to a fuzzy representation of a signal related to the integral gain $K_I$.

3. A fuzzy logic control module according to claim 2, and further operable to calculate from the signal e(t) a signal $\Delta e(t)$ representing a change in the error in temperature between time t-1 and time t.

4. A fuzzy logic control module according to claim 3, in which the fuzzy representations of signals mapped by the first fuzzy rules set are fuzzy representations of e(t) and $\Delta e(t)$.

5. A fuzzy logic control module according to claim 4, and further comprising a first fuzzy logic input membership function operable to convert the signal $\Delta e(t)$ to a fuzzy representation.

**6.** A fuzzy logic control module according to claim 5, and further comprising a first absolute value operator operable to convert the signal $\Delta e(t)$ to its absolute value $|\Delta e(t)|$ before conversion by its fuzzy logic input membership function.

**7.** A fuzzy logic control module according to any one of claims 4 to 6, and further comprising a second fuzzy logic input membership function operable to convert the signal $e(t)$ to a fuzzy representation.

**8.** A fuzzy logic control module according to claim 7, and further comprising a second absolute value operator operable to convert the signal $e(t)$ to its absolute value $|e(t)|$ before conversion by its fuzzy logic input membership function.

**9.** A fuzzy logic control module according to any one of claims 2 to 8, in which the fuzzy representation of a signal related to the integral gain $K_I$ is a fuzzy representation of a signal $\Delta K_I$ representing a change in $K_I$ between time t-1 and time t.

**10.** A fuzzy logic control module according to claim 9, and further comprising a first fuzzy logic output membership function operable to convert the fuzzy representation of $\Delta K_I$ to $\Delta K_I$.

**11.** A fuzzy logic control module according to claim 10, and further operable to calculate the first output $K_I$ from $\Delta K_I$ and a previous value of $K_I$ at time t-1.

**12.** A fuzzy logic control module according to any preceding claim, in which the fuzzy logic rules comprise a second fuzzy rules set that maps fuzzy representations of signals related to at least one of the inputs to a fuzzy representation of a signal related to the proportional gain $K_P$.

**13.** A fuzzy logic control module according to claim 12, and further operable to calculate from the valve control signal $v(t)$ a signal $\Delta v(t)$ representing a change in the magnitude of the opening of the inlet valve between time t-1 and time t.

**14.** A fuzzy logic control module according to claim 13, in which the fuzzy representations of signals mapped by the second fuzzy rules set are fuzzy representations of $e(t)$ and $\Delta v(t)$.

**15.** A fuzzy logic control module according to claim 13 or claim 14, and further comprising a third fuzzy logic input membership function operable to convert the signal $\Delta v(t)$ to a fuzzy representation.

**16.** A fuzzy logic control module according to claim 15, and further comprising a third absolute value operator operable to convert the signal $\Delta v(t)$ to its abso-

lute value $|\Delta v(t)|$ before conversion by its fuzzy logic input membership function.

**17.** A fuzzy logic control module according to any one of claims 13 to 16, and further comprising a fuzzy logic input membership function operable to convert the signal $e(t)$ to a fuzzy representation.

**18.** A fuzzy logic control module according to claim 17, and further comprising an absolute value operator operable to convert the signal $e(t)$ to its absolute value $|e(t)|$ before conversion by its fuzzy logic input membership function.

**19.** A fuzzy logic control module according to any one of claims 12 to 18, in which the fuzzy representation of a signal related to the proportional gain $K_P$ is a fuzzy representation of a signal $\Delta K_P$ representing a change in $K_P$ between time t-1 and time t.

**20.** A fuzzy logic control module according to claim 19, and further comprising a second fuzzy logic output membership function operable to convert the fuzzy representation of $\Delta K_P$ to $K_P$.

**21.** A fuzzy logic control module according to claim 20, and further operable to calculate the second output $K_P$ from $\Delta K_P$ and a previous value of $K_P$ at time t-1.

**22.** A temperature control unit comprising:

> a fuzzy logic control module according to any previous claim; and
> a proportional-integral controller arranged to receive the first and second outputs from the fuzzy logic control module and operable to use the said first and second outputs to generate the valve control signal $v(t)$.

**23.** A temperature control unit according to claim 22, in which the proportional-integral controller is operable to calculate the valve control signal $v(t)$ according to:

$$v(t) = K_P e(t) + K_I \int e(t)\, dt.$$

**24.** A temperature control unit according to claim 22 or claim 23, and further arranged to receive a signal $y(t)$ representing the actual measured temperature of the fluid and a signal $r(t)$ representing the desired temperature of the fluid, the temperature control unit comprising a summing device operable to calculate the signal $e(t)$ from $y(t)$ and $r(t)$.

**25.** A temperature control unit according to claim 24 and further comprising a temperature sensor operable to measure the actual temperature of the fluid, convert the measurement to the signal y(t) and deliver the signal y(t) to the temperature control unit.

**26.** A dyeing machine comprising:

a main tank to receive textile material to be dyed;

a pipe works arranged to circulate dye through the main tank;

a heat exchanger operable to regulate the temperature of the dye, the heat exchanger having an inlet valve with an opening having an adjustable magnitude to let heating and cooling material into the heat exchanger, the magnitude of the opening being represented by a valve control signal v(t);

a temperature sensor operable to measure the actual temperature of the dye after it has been regulated by the heat exchanger and deliver a signal y(t) representing the actual measured temperature; and

a temperature control unit according to any one of claims 22 to 24, provided with a signal r(t) representing the desired temperature of the dye during a dyeing process, the temperature control unit arranged to receive the signal y(t) from the temperature sensor, and operable to calculate a signal e(t) representing an error in temperature between the actual measured temperature of the fluid y(t) and a desired temperature of the fluid, and to deliver a signal valve control signal v(t) to the heat exchanger inlet valve to adjust the magnitude of the inlet valve opening and thereby regulate the temperature of the dye in accordance with the desired temperature.

**27.** A method of controlling fluid temperature, comprising:

measuring an actual temperature of a fluid and generating a signal y(t) representing the actual temperature;

supplying the signal y(t) to a proportional-integral controller;

calculating a signal e(t) representing an error in temperature between the actual measured temperature of the fluid and a desired temperature of the fluid;

using the proportional-integral controller to generate a valve control signal v(t) representing a magnitude of an opening in an inlet valve of a heat exchanger operable to regulate a fluid temperature from the signal e(t), an integral gain $K_I$ and a proportional gain $K_P$; and

supplying the valve control signal v(t) to the inlet valve to control the fluid temperature; wherein

the integral gain $K_I$ and the proportional gain $K_P$ are obtained using fuzzy logic by applying fuzzy logic rules to map fuzzy representations of signals related to the valve control signal v(t) and to the temperature error signal e(t) to fuzzy representations of signals related to the integral gain $K_I$ and the proportional gain $K_P$.

**28.** A method of controlling fluid temperature according to claim 27, further comprising calculating a signal related to the temperature error signal e(t) by calculating from the temperature error signal e(t) a signal $\Delta e(t)$ representing a change in error in temperature between time t-1 and time t.

**29.** A method of controlling fluid temperature according to claim 28, in which the applying fuzzy logic rules comprises applying a first fuzzy rules set that maps fuzzy representations of e(t) and $\Delta e(t)$ to a fuzzy representation of a signal related to the integral gain $K_I$.

**30.** A method of controlling fluid temperature according to any one of claims 27 to 29, further comprising calculating a signal related to the valve control signal v(t) by calculating from the valve control signal v(t) a signal $\Delta v(t)$ representing a change in the magnitude of the inlet valve opening between time t-1 and time t.

**31.** A method of controlling fluid temperature according to claim 30, in which the applying fuzzy logic rules comprises applying a second fuzzy rules set that maps fuzzy representations of e(t) and $\Delta v(t)$ to a fuzzy representation of a signal related to the proportional gain $K_P$.

Figure 1

Figure 2

Figure 3

Figure 4

Small

Medium
Small

Medium
Large

Large

100%

0

Figure 5

$|\Delta e_t|, |e_t|, |\Delta v_t|$

Zero

Very
Negative

Negative

Small
Negative

Small
Positive

Positive

Very
Positive

Figure 6

$\Delta KI_t, \Delta Kp_t$